# EUROPEAN PATENT SPECIFICATION

(11) **EP 2 020 359 B1**
(45) Date of publication and mention of the grant of the patent: **03.02.2010**
(21) Application number: 08013162.6
(22) Date of filing: 22.07.2008
(51) Int. Cl.: B62B 7/08, B62B 9/14

(54) **Canopied foldable baby carriage**
Klappbarer Kinderwagen mit Faltdach
Landau pliable à baldaquin

(30) Priority: 31.07.2007 JP 2007199497
(43) Date of publication of application: 04.02.2009
(73) Proprietor: Aprica Children's Products Inc., Chuo-ku, Osaka-shi Osaka 542-0082 (JP)
(72) Inventor: Kassai, Kenzou, Chuo-ku, Osaka-shi Osaka 542-0083 (JP); Ohnishi, Ichiro, Osaka-shi Osaka 542-0082 (JP)
(74) Representative: Prüfer & Partner GbR European Patent Attorneys

(56) References cited:
- EP-A- 1 764 281
- GB-A- 2 168 297
- JP-B- 7 012 824
- US-A- 3 873 116

## Description

### BACKGROUND OF THE INVENTION

### Field of the Invention

The present invention relates to a foldable baby carriage. More particularly, the present invention relates to a canopied foldable baby carriage having a dome shaped canopy.

### Description of the Background Art

The applicant of the present invention disclosed a light-weight baby carriage in Japanese Patent Publication No. H07(1995)-12824 of examined applications. This baby carriage is shown in Figs. 11 through 13 and comprises the closest prior art to the subject-matter of claim 1.

The illustrated baby carriage includes, as a basic structure, a pair of front legs 3, 4 having front wheels 1, 2 at their respective lower parts, a pair of rear legs 7, 8 having rear wheels 5, 6 at their respective lower parts, a pair of seat support bars 9, 10, a pair of seat hanging bars 11, 12, a pair of push bars 13, 14, a front-leg connecting member 15 serving as width-direction connecting means for connecting the left and right sides of the baby carriage, a pair of cross bars 16, 17 serving as the width-direction connecting means, a hook 18 serving as opened-state lock means for locking an opened state of the baby carriage, and a pair of link bars 19, 20 serving as the opened-state lock means.

The front legs 3, 4 and the rear legs 7, 8 are provided so as to cross each other. The front legs 3, 4 and the rear legs 7, 8 are pivotally connected to each other at their crossing portions through pins 21, 22, respectively. Front parts of the seat support bars 9, 10 are pivotally connected to upper parts of the rear legs 7, 8 through pins 23, 24, respectively. Lower parts of the seat hanging bars 11, 12 are pivotally connected to rear parts of the seat support bars 9, 10 through pins 25, 26, respectively.

Lower parts of the push bars 13, 14 are pivotally connected to upper parts of the front legs 3, 4, through pins 27, 28, respectively. As shown in the figures, the push bars 13, 14 and the seat hanging bars 11, 12 cross each other. The push bars 13, 14 and the seat hanging bars 11, 12 are pivotally connected to each other at their crossing portions through pins 29, 30, respectively. Handles 38, 39 to be held by a person who pushes the baby carriage are provided at upper ends of the push bars 13, 14, respectively.

The front-leg connecting member 15 has its both ends pivotally connected to the front legs 3, 4, respectively. The front-leg connecting member 15 is foldable in the middle in the direction shown by arrow A. The pair of cross bars 16, 17 cross to form an X shape, and are pivotally connected at the crossing point through a pin 36. An upper end of one cross bar 16 is pivotally connected to the push bar 13 located on the right side, and a lower end of the cross bar 16 is pivotally connected to the rear leg 8 located on the left side. An upper end of the other cross bar 17 is pivotally connected to the push bar 14 located on the left side, and a lower end of the cross bar 17 is pivotally connected to the rear leg 7 located on the right side.

The front legs 3, 4 have front-leg sleeves 31, 32 that are slidable on the front legs 3, 4, respectively. The seat support bars 9, 10 have seat sleeves 33, 34 that are slidable on the seat support bars 9, 10, respectively. The front-leg sleeves 31, 32 slidably receive the front legs 3, 4, and the seat sleeves 33, 34 slidably receive the seat support bars 9, 10, respectively. The front-leg sleeves 31, 32 and the seat sleeves 33, 34 are pivotally connected to each other through pins, respectively.

In order to synchronize a slide operation of the seat sleeves 33, 34 with a folding operation of the front-leg connecting member 15, tension rods 40, 41 are provided between the seat sleeves 33, 34 and the front-leg connecting member 15, respectively.

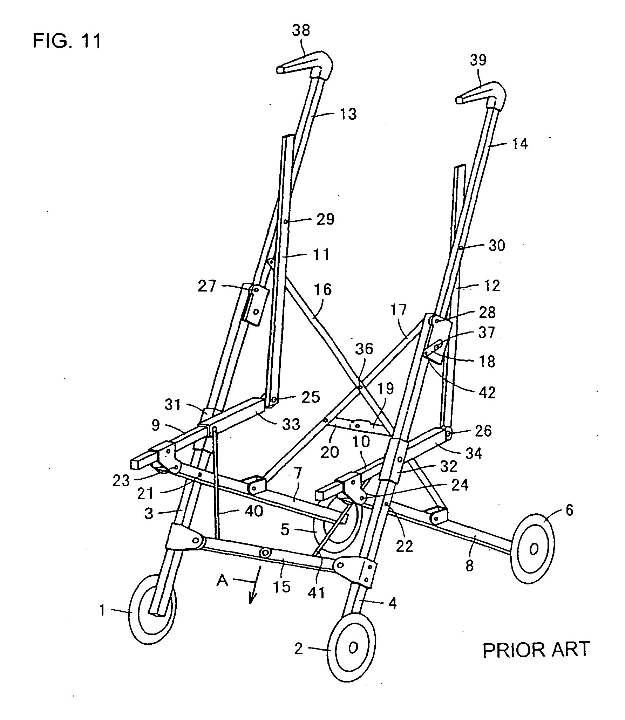

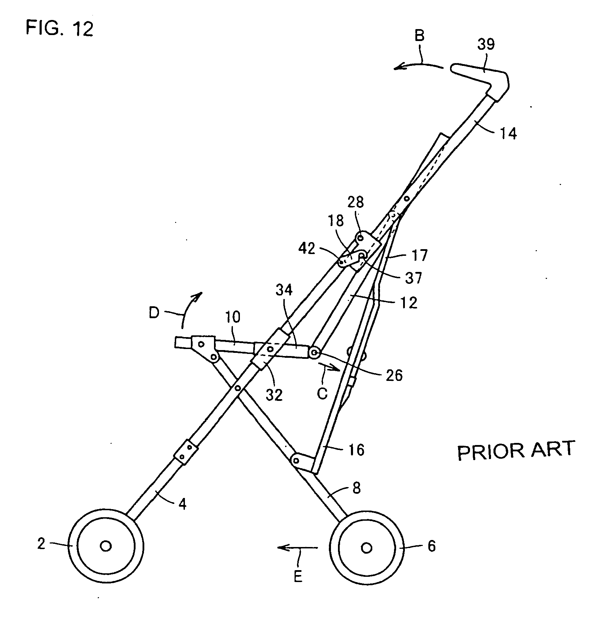

Figs. 11 and 12 show an opened state of the baby carriage. The hook 18 is provided in order to lock this opened state. The hook 18 is pivotally attached to the front leg 4 through a pin 42. The hook 18 inhibits pivoting of the push bar 14 with respect to the front leg 4 by engaging with an engaging pin 37 provided at a lower end of the push bar 14. The same hook is provided between the front leg 3 and the push bar 13 which are located on the right side of the baby carriage.

In order to fold the baby carriage, the hooks 18 are first pivoted to release a locked state between the front legs 3, 4 and the push bars 13, 14, respectively. The joint of the pair of link bars 19, 20 is then moved slightly upward to release a locked state between the pair of cross bars 16, 17. In this state, the push bars 13, 14 are pushed forward. As a result, the push bars 13, 14 are respectively pivoted around the pins 27, 28 as shown by arrow B in Fig. 12. With the pivoting of the push bars 13, 14, the pins 25, 26 (the joints of the seat supporting bars 9, 10 and the seat hanging bars 11, 12) move backward as shown by arrow C in Fig. 12. At this time, the seat support bars 9, 10 relatively slide in the seat sleeves 33, 34, respectively. Moreover, the seat support bars 9, 10 respectively pivot around the joints of the seat sleeves 33, 34 and the front-leg sleeves 31, 32, as shown by arrow D in Fig. 12. As a result, the rear wheels 5, 6 move toward the front wheels 1, 2.

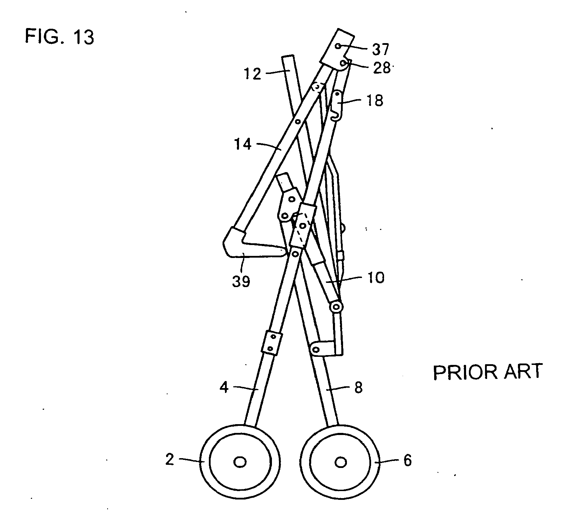

Fig. 13 shows a folded state of the baby carriage shown in Figs. 11 and 12. As shown in the figure, the front wheels 1, 2 and the rear wheels 5, 6 are located approximately at the same height, which enables self-standing of the baby carriage. In other words, the respective lengths and connecting positions of the front legs 3, 4, the rear legs 7, 8, the seat support bars 9, 10, the seat hanging bars 11, 12, the push bars 13, 14, and the width-direction connecting means are selected so as to achieve the above operation, that is, so that the rear wheels 5, 6 move toward the front wheels 1, 2 in the folding operation of the baby carriage and that the rear wheels 5, 6 and the front wheels 1, 2 are located approximately at the same height in the folded state of the baby carriage to enable self-standing of the baby carriage.

The baby carriage disclosed in Japanese Patent Publication No. H07(1995)-12824 of examined applications has a basic structure that enables reduction in weight with a simple structure, but there still is room for improvement. Basically, the opened state of the baby carriage is locked by engaging the hooks 18 attached to the upper parts of the front legs 3, 4 with the engaging pins 37 provided in the lower part of the push bars 13, 14, respectively.

As can be seen from Fig. 12 that shows the opened state of the baby carriage, the hook 18 and the engaging pin 37 are located lower than the pin 28 that pivotally connects the front leg 4 and the push bar 14 to each other. Therefore, in the folded state of the baby carriage shown in Fig. 13, the push bar 14 is bent forward and the lower end of the push bar 14 protrudes above the upper end of the front leg 4. Such protrusion of the lower end of the push bar 14 increases the height of the baby carriage in the folded state.

Moreover, when the baby carriage is changed from the folded state of Fig. 13 to the opened state of Fig. 12, the lower end of the push bar 14 and the upper end of the front leg 4 gradually approach each other so as to reduce the gap therebetween. Therefore, fingers and clothes may be pinched between the push bar 14 and the front leg 4.

As described above, there is a room for improvement in the light-weight foldable baby carriage shown in Figs. 11 through 13.

Many baby carriages currently on the market have a canopy. The canopy has a function to adjust brightness in a seat in addition to functions to protect against the sun, rain, and wind. In order to effectively provide such functions, it is desirable that the canopy has a dome shape so that the canopy can cover a large space.

A baby carriage having a dome-shaped canopy is disclosed in, for example, Japanese Patent Publication No. 2002-187554 of unexamined applications and Japanese Patent Publication No. 2004-276874 of unexamined applications.

In order to fold a foldable baby carriage having a dome-shaped canopy, the canopy is first folded so that an expansion angle of the canopy is reduced, and then the body of the baby carriage is folded. It is a hassle for a user to perform a folding operation of the canopy and then a folding operation of the body of the baby carriage.

### SUMMARY OF THE INVENTION

It is an object of the present invention as defined in claim 1 to provide a canopied foldable baby carriage whose canopy is folded automatically when a folding operation of the body of the baby carriage is performed.

It is another object of the present invention to provide a canopied foldable baby carriage capable of implementing reduction in weight with a simple structure while having the above canopy, of reducing the height of the baby carriage in a folded state, and of avoiding problems such as pinched fingers.

In a baby carriage according to the invention, rear wheels move toward front wheels in a folding operation, and the rear wheels and the front wheels are located approximately at a same height in a folded state to enable self-standing of the baby carriage.

The baby carriage according to the invention includes: a pair of front legs extending in an up-down direction and having front wheels in their respective lower parts; a pair of rear legs extending in the up-down direction, having rear wheels in their respective lower parts, and provided so as to cross the front legs and pivotally connected to the front legs at the crossing portions through pins, respectively; a pair of seat support bars extending in a front-back direction and having their respective front parts pivotally connected to upper parts of the rear legs; a pair of seat hanging bars extending in the up-down direction and having their respective lower parts pivotally connected to rear parts of the seat support bars; a pair of push bars extending in the up-down direction so as to cross the seat hanging bars, having their respective lower ends pivotally connected to upper ends of the front legs through pivot shafts, and pivotally connected to the seat hanging bars at the crossing portions, respectively; width-direction connecting means formed by each front leg, each rear leg, each seat support bar, each seat hanging bar, and each push bar for connecting left and right sides of the baby carriage; opened state lock means for locking an opened state of the baby carriage by inhibiting pivoting of the push bars with respect to the front legs with the push bars aligned approximately linearly with respect to the front legs, respectively; closed state lock means for locking a folded state of the baby carriage by inhibiting pivoting of the push bars with respect to the front legs with the push bars pivoted forward to a position where upper ends of the push bars get close to the front legs, respectively; and a dome-shaped canopy having its both ends in a width direction supported by the pair of push bars, respectively.

The canopy includes a support member fixedly attached to each push bar, a shaft member attached to each support member, and at least two canopy ribs whose ends are held together by the shaft members like a pivot of a folding fan and which are structured so that an expansion angle is variable.

According to the present invention having the above structure, when a folding operation of a body of the baby carriage is performed by pivoting the push bars forward with the canopy being in an opened state, a front end part of the canopy abuts on the front legs during the folding operation of the body. As the push bars are pivoted further, the canopy is folded by the front legs and the push bars so that an expansion angle of the canopy is reduced. Accordingly, by performing the folding operation of the body of the baby carriage, the canopy is also folded automatically, which is convenient for a user.

In one embodiment, the opened state lock means and the closed state lock means are formed by a common member to serve as opened/closed state lock means. In this embodiment, the opened/closed state lock means includes a front-leg-side engaging recess located on the upper end of each front leg and provided along a circle around the pivot shaft, a push-bar-side engaging recess located on the lower end of each push bar and provided along a circle around the pivot shaft, and a lock member having an engaging protrusion for engaging with the front-leg-side engaging recess and the push-bar-side engaging recess, and provided displaceably between a first position and a second position along the pivot shaft. When in the first position, the lock member engages both the front-leg-side engaging recess and the push-bar-side engaging recess to inhibit pivoting of the push bar with respect to the front leg, and when in the second position, the lock member engages only one of the front-leg-side engaging recess and the push-bar-side engaging recess to allow pivoting of the push bar with respect to the front leg. The opened/closed state lock means further includes a biasing member for biasing the lock member toward the first position, and a press member for moving the lock member to the second position against biasing force of the biasing member.

According to a preferred embodiment of the above structure, each element of the opened/closed state lock means is arranged around each pivot shaft that pivotally connects the respective front leg with the respective push bar. Accordingly, in the folded state of the baby carriage, the lower ends of the push bars do not protrude above the upper ends of the front legs, whereby the height of the baby carriage in the folded state can be reduced. Moreover, the lower ends of the push bars and the upper ends of the front legs are always in contact with each other and are not separated from each other both in the opened and folded states of the baby carriage. Therefore, problems such as pinched fingers and clothes do not occur.

Preferably, the lock member has a gear shape centering around the pivot shaft, and the front-leg-side engaging recess and the push-bar-side engaging recess have a gear-shaped recess centering around the pivot shaft.

In one embodiment, the canopy includes a bracket mounted to the support member so as to be movable in an axial direction of the shaft member and pivotable in a circumferential direction of the shaft member, and a spring member for spring biasing the bracket toward the support member. A corrugated portion is formed on facing surfaces of the bracket and the support member in the mounted portion of the bracket and the support member. One of the canopy ribs is fixed to the bracket.

Preferably, the corrugated portion has a wave pattern in which slant faces having opposite tilt directions are alternately arranged, and when the bracket is pivoted, protrusions on the bracket sequentially go past protrusions on the support member against pressing force of the spring member to fit in a next recess.

### BRIEF DESCRIPTION OF THE DRAWINGS

Fig. 1 is a side view showing a baby carriage according to an embodiment of the present invention;
Fig. 2 is a side view showing a folded state of the baby carriage according to the embodiment of the present invention;
Figs. 3A, 3B and 3C are cross-sectional views showing opened/closed state lock means, wherein Fig. 3A shows a state in which an opened state or closed state of the baby carriage is locked, Fig. 3B shows a state in which a pressing operation of a press member is allowed, and Fig. 3C shows a state in which a pivoting operation of a push bar is allowed;
Fig. 4 is a front view of a lock member;
Fig. 5 is a partial cross-sectional side view specifically showing a pivot-like portion of each canopy rib;
Fig. 6 is a side view showing an example of a support member of a canopy;
Fig. 7 is a side view showing an example of a bracket of the canopy;
Fig. 8 is a longitudinal sectional view of the bracket;
Fig. 9 is a side view of a canopy rib cover;
Fig. 10 is a longitudinal sectional view of the canopy rib cover;
Fig. 11 is a perspective view of a baby carriage disclosed in Japanese Patent Publication No. H07(1995)-12824 of examined applications;
Fig. 12 is a side view of the baby carriage disclosed in Japanese Patent Publication No. H07(1995)-12824 of examined applications; and
Fig. 13 is a side view showing a folded state of the baby carriage disclosed in Japanese Patent Publication No. H07(1995)-12824 of examined applications.

### DESCRIPTION OF THE PREFERRED EMBODIMENTS

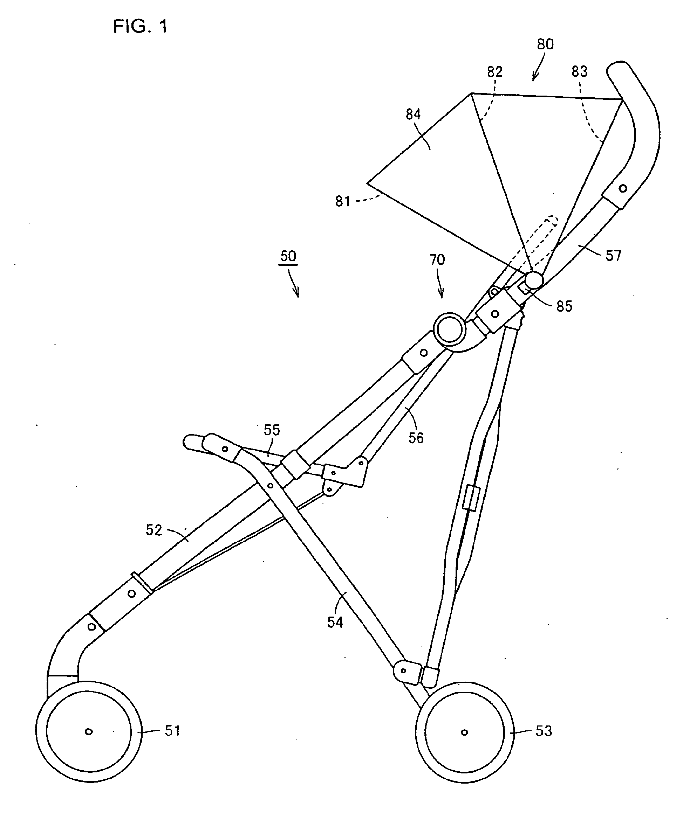

A body of a baby carriage according to the present invention has substantially the same basic structure, folding mechanism and the like as those of the baby carriage disclosed in Japanese Patent Publication No. H07(1995)-12824 of examined applications. Accordingly, description thereof will be omitted. The body of the baby carriage according to the present invention is different from the baby carriage disclosed in Japanese Patent Publication No. H07(1995)-12824 of examined applications in the structure of opened/closed state lock means. In an embodiment of the present invention described below, opened state lock means for locking an opened state of the baby carriage and closed state lock means for locking a folded state of the baby carriage are formed by a common member to serve as opened/closed state lock means. In another embodiment, these lock means may be provided at separate locations instead of being formed by a common member. Hereinafter, a characteristic structure of the body of the baby carriage according to a preferred embodiment of the present invention will be described with reference to Figs. 1 through 4.

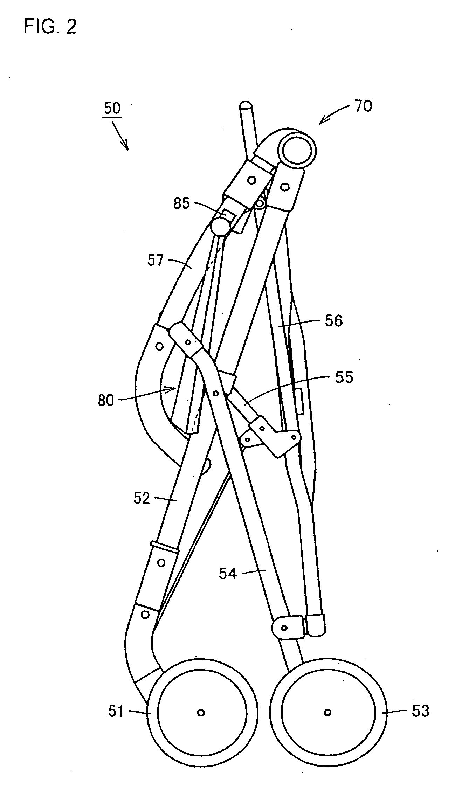

In a folding operation of a baby carriage 50 shown in Figs. 1 and 2, rear wheels 53 move toward front wheels 51. In a folded state, the rear wheels 53 and the front wheels 51 are located approximately at the same height, enabling self-standing of the baby carriage 50.

The baby carriage 50 includes, as a basic structure, a pair of front legs 52, a pair of rear legs 54, a pair of seat support bars 55, a pair of seat hanging bars 56, a pair of push bars 57, width-direction connecting means, opened/closed state lock means 70, and a dome-shaped canopy 80. The front legs 52 extend in an up-down direction and have front wheels 51 at their respective lower parts. The rear legs 54 extend in the up-down direction and have rear wheels 53 at their respective lower parts. The rear legs 54 are provided so as to cross the front legs 52, and are pivotally connected to the front legs 52 at their crossing portions through pins, respectively. The seat support bars 55 extend in a front-back direction, and front parts of the seat support bars 55 are pivotally connected to upper parts of the rear legs 54, respectively. The seat hanging bars 56 extend in the up-down direction, and lower parts of the seat hanging bars 56 are pivotally connected to rear parts of the seat support bars 55, respectively. The push bars 57 extend in the up-down direction and respectively cross the seat hanging bars 56. Lower ends of the push bars 57 are pivotally connected to upper ends of the front legs 52 through pivot shafts, respectively. The push bars 57 are pivotally connected to the seat hanging bars 56 at their crossing portions, respectively. The width-direction connecting means connects the left and right sides of the baby carriage, each of the left and right sides being formed by the front leg 52, the rear leg 54, the seat support bar 55, the seat hanging bar 56, and the push bar 57. The opened/closed state lock means 70 locks an opened state and closed state (folded state) of the baby carriage by inhibiting pivoting of the push bars 57 with respect to the front legs 52. The dome-shaped canopy 80 has its both ends in the width direction supported by the pair of push bars 57, respectively.

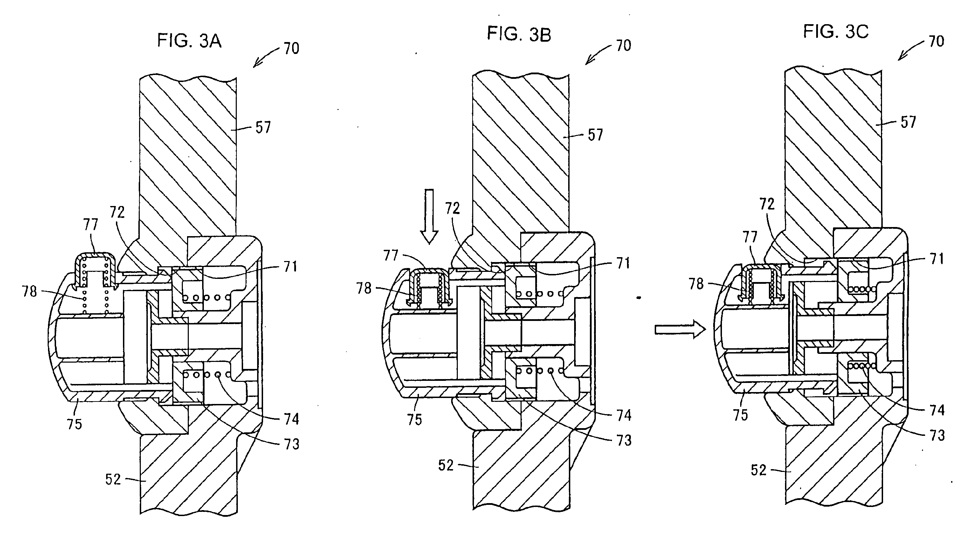

The illustrated embodiment is characterized in the structure of the opened/closed state lock means 70 and dome-shaped canopy 80. The opened/closed state lock means 70 and the dome-shaped canopy 80 will be described later in detail with reference to Figs. 3 through 10. The fact that the above-described conventional problems are solved by providing the characteristic opened/closed state lock means 70 will now be described with reference to Figs. 1 and 2.

As can be seen from Figs. 1 and 2, each element of the opened/closed state lock means 70 is arranged around each pivot shaft that pivotally connects the respective front leg 52 with the respective push bar 57. Accordingly, in the folded state of the baby carriage shown in Fig. 2, the lower ends of the push bars 57 do not protrude above the upper ends of the front legs 52, whereby the height of the baby carriage in the folded state can be reduced. Moreover, the lower ends of the push bars 57 and the upper ends of the front legs 52 are always in contact with each other and are not separated from each other both in the opened and folded states of the baby carriage. Therefore, problems such as pinched fingers and clothes do not occur.

Fig. 3 shows a cross-sectional structure of the opened/closed state lock means 70. Illustration of the pivot shafts that respectively pivotally connect the front legs 52 with the push bars 57 is omitted in Fig. 3. The opened/closed state lock means 70 locks the opened state of the baby carriage 50 shown in Fig. 1 and the closed state of the baby carriage 50 shown in Fig. 2 by inhibiting pivoting of the push bars 57 with respect to the front legs 52.

The opened/closed state lock means 70 includes a plurality of front-leg-side engaging recesses 71, a plurality of push-bar-side engaging recesses 72, a lock member 73, a biasing member 74, and a press member 75. The plurality of front-leg-side engaging recesses 71 are located on the upper end of each front leg 52 and provided along a circle around the pivot shaft. In the illustrated embodiment, the front-leg-side engaging recesses 71 are provided in the form of gear-like recesses centering around the pivot shaft. The plurality of push-bar-side engaging recesses 72 are located on the lower end of each push bar 57 and provided along a circle around the pivot shaft. In the illustrated embodiment, the push-bar-side engaging recesses 72 are provided in the form of gear-like recesses centering around the pivot shaft.

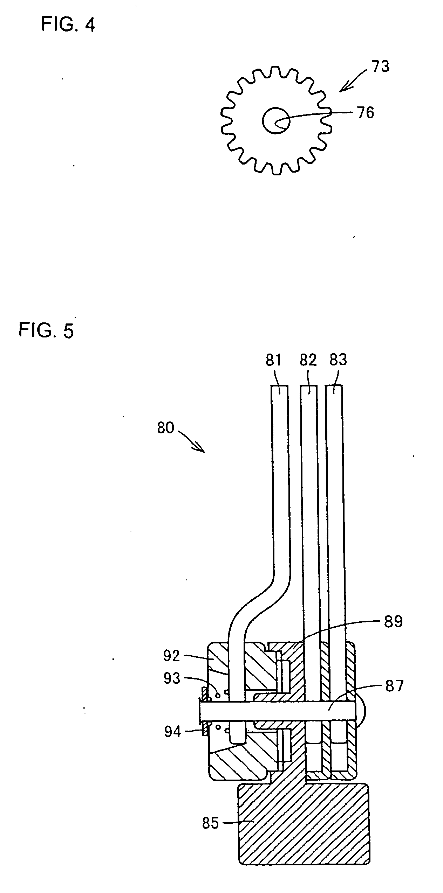

The lock member 73 has engaging protrusions that engage with the front-leg-side engaging recesses 71 and the push-bar-side engaging recesses 72, and are provided so as to be displaceable between a first position (Fig. 3A) and a second position (Fig. 3C) along the pivot shaft. In the illustrated embodiment, as shown in Fig. 4, the lock member 73 has a gear shape centering around a central hole 76 that receives the pivot shaft. In the first position shown in Fig. 3A, the lock member 73 engages with both the front-leg-side engaging recesses 71 and the push-bar-side engaging recesses 72 to inhibit pivoting of the push bar 57 with respect to the front leg 52. In the second position shown in Fig. 3C, on the other hand, the lock member 73 engages with only one of the front-leg-side engaging recesses 71 and the push-bar-side engaging recesses 72 to allow pivoting of the push bar 57 with respect to the front leg 52. In the illustrated embodiment, the lock member 73 in the second position engages only with the front-leg-side engaging recesses 71 and does not engage with the push-bar-side engaging recesses 72.

The biasing member 74 is a spring in the illustrated embodiment. The biasing member 74 biases the lock member 73 toward the first position (the position shown in Fig. 3A). The press member 75 is provided to move the lock member 73 to the second position (the position shown in Fig. 3C) against the biasing force of the biasing member 74 so that the push bar 57 can be pivoted with respect to the front leg 52.

In the illustrated embodiment, a stopper 77 for inhibiting a pressing operation of the press member 75 is provided to prevent the opened state or folded state of the baby carriage from being unlocked due to accidental or unintentional pressing of the press member 75. The illustrated press member 75 has a cylindrical shape surrounding the pivot shaft, and is held displaceably in a through hole formed in the lower end of the push bar 57. The stopper 77 is held by the press member 75 so as to be displaceable between a position where the stopper 77 protrudes from the outer peripheral surface of the press member 75 (a position shown in Fig. 3A) and a position where the stopper 77 retracts in the outer peripheral surface of the press member 75 (a position shown in Figs. 3B and 3C). The stopper 77 is always biased toward the protruding position by a spring 78.

When in the protruding position as shown in Fig. 3A, the stopper 77 abuts on an outer wall surface of the push bar 57 to prohibit the pressing operation of the press member 75. As shown in Figs. 3B and 3C, on the other hand, the pressing operation of the press member 75 is allowed when the stopper 77 is pressed back in the outer peripheral surface of the press member 75 against the biasing force of the spring 78.

Providing such a stopper 77 enables double locking of the opened state and closed state of the baby carriage 50. In other words, two operations, that is, first pressing down the stopper 77 and then pressing the press member 75, are required to unlock the opened state or closed state of the baby carriage 50. This is preferable in terms of safety. In the illustrated embodiment, the press-down direction of the stopper 77 and the pressing direction of the press member 75 cross each other at 90 degrees. Therefore, the two elements will not be pressed at the same time either accidentally or unintentionally, which is more preferable in terms of safety.

In the illustrated embodiment, the plurality of front-leg-side engaging recesses 71 and the plurality of push-bar-side engaging recesses 72 are provided around the pivot shaft. Therefore, both the opened state and closed state of the baby carriage can be locked. Note that, in the illustrated embodiment, the lock member has a gear shape centering around the pivot shaft. In another embodiment, however, the lock member may be in the form of a bar-shaped pin located on a circumference around the pivot shaft. In this case, in order to implement locking of both the opened state and closed state of the baby carriage, an engaging recess for receiving the tip of the lock pin is provided at two positions on a circumference of the pivot shaft in at least one of the upper end of the front leg and the lower end of the push bar. A lock pin that is biased by a spring and an engaging recess for receiving the base of the lock pin may be provided in the other of the upper end of the front leg and the lower end of the push bar.

Although not directly relating to the opened/closed state lock means 70 which is a characteristic of the present invention, a preferred structural characteristic of the embodiment of the present invention includes the fact that the height of a seating surface is higher than that of a conventional baby carriage. If the height of the seating surface of the baby carriage is low, reflected heat from a road surface or dust floating near the road surface may affect an infant or small child on the baby carriage. In a preferred embodiment, the height of the seating surface is set to about 50 cm, which is higher than a conventional baby carriage, in order to prevent reflected light and dust from the road surface from affecting an infant or small child on the baby carriage. By setting the height of the seating surface to about 50 cm, the distance between the eyes of an infant or small child on the baby carriage and the eyes of a parent is reduced, which facilitates exchange of affection through the eyes.

The most important characteristic of the present invention is that the dome-shaped canopy 80 has its both ends in the width direction respectively connected to the pair of push bars 57 so that the dome-shaped canopy 80 is folded automatically according to a folding operation of the body of the baby carriage 50. The push bars 57 are pivoted forward by the folding operation of the body of the baby carriage, and in the folded state, upper ends of the push bars 57 are located close to the front legs 52, respectively.

As shown in Figs. 1 and 2, the canopy 80 includes support members 85, shaft members 87 (Fig. 5), three canopy ribs 81, 82, 83, and canopy cloth 84. The support members 85 are fixedly attached to the push bars 57, respectively. The shaft members 87 are fixedly attached to the support members 85, respectively. The canopy ribs 81, 82, 83 are held together by the shaft members 87 like a pivot of a folding fan, and are structured so that the expansion angle is variable. The canopy cloth 84 is provided over the canopy ribs 81, 82, 83.

As can be seen from Figs. 1 and 2, when a folding operation of the body of the baby carriage 50 is performed by pivoting the push bars 57 forward with the canopy 80 being in an opened state, a front end part of the canopy 80 abuts on the front legs 52 during the folding operation of the body. As the push bars 57 are pivoted further, the canopy 80 is folded by the front legs 52 and the push bars 57 so that the expansion angle of the canopy 80 is reduced. Accordingly, by performing the folding operation of the body of the baby carriage 50, the canopy 80 is also folded automatically, which is convenient for a user. In order to change the baby carriage 50 from the folded state to the opened state, the push bars 57 are first pivoted backward until the push bars 57 are aligned approximately linearly with respect to the respective front legs 52. The push bars 57 are locked in this state and the canopy 80 is opened. Accordingly, in an embodiment of the present invention, only a folding operation of the body of the baby carriage needs to be performed to fold the baby carriage, while an operation of changing the body of the baby carriage to the opened state and an operation of opening the canopy 80 need to be performed to change the baby carriage 50 to the opened state.

The dome-shaped canopy 80 may have any structure as long as the expansion angle is variable. Figs. 5 through 10 show an embodiment of the canopy 80. Fig. 5 is a partial cross-sectional side view specifically showing a pivot-like portion of each canopy rib. The canopy 80 of this embodiment has three canopy ribs 81, 82, 83. These canopy ribs 81, 82, 83 can be opened and closed like ribs of a folding fan. In the most opened state, the canopy cloth 84 is stretched tightly. The whole canopy 80 is pivotable in a front-back direction around the support members 85 fixedly attached to the respective push bars 57.

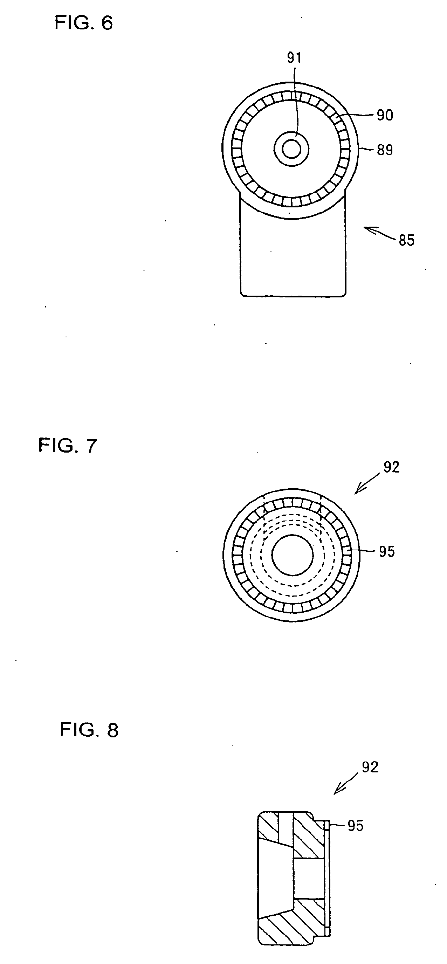

As shown in Fig. 5, the three canopy ribs 81, 82, 83 are supported by the support member 85 through a shaft member 87. In other words, the shaft member 87 extends through the support member 85 and respective ends of the canopy ribs 81, 82, 83 and is structured just like a pivot of a folding fan. The support member 85 is fixedly attached to the lower part of the respective push bar 57. An upper part of the support member 85 is formed in a pivot-like portion 89 through which the shaft member 87 extends. As shown in Fig. 6, one end face of the pivot-like portion 89 has a corrugated portion 90 of a so-called knurled shape formed on a circumference around the shaft center of the shaft member 87. A boss portion 91 is formed in a portion through which the shaft member 87 extends.

A bracket 92 is mounted to the end face of the pivot-like portion 89 on which the corrugated portion 90 and the boss portion 91 are formed. The bracket 92 has an end face that fits the shape of this end face of the pivot-like portion 89. The canopy rib 81 is inserted into the bracket 92. The canopy rib 81 and the bracket 92 are fixed to each other so as to operate integrally. A coiled spring 93 is provided in a compressed state between one end of the shaft member 87 and the end of the canopy rib 81 with the shaft member 87 extending therethrough. One end of the coiled spring 93 is supported by a washer 94, and spring biasing force of the coiled spring 93 constantly presses the bracket 92 against the support member 85 through the canopy rib 81. A corrugated portion 95 having the same structure as that of the corrugated portion 90 is formed at an end face of the bracket 92 so as to mesh with the corrugated portion 90 of the support member 85. The corrugated portions 90, 95 will now be described in more detail. In the corrugated portions 90, 95, slant faces forming corrugations are arranged as follows: flat faces having opposite tilt directions are alternately arranged adjacent to each other so that mountain-like protrusions and valley-like recesses are alternately formed. An angle between the slant faces is preferably 120 degrees. Accordingly, when the bracket 92 or the canopy rib 81 is pivoted around the shaft member 87 in a circumferential direction, the protrusions on the bracket 92 sequentially go past the protrusions on the support member 85 to fit in the next recess. At this time, the bracket 92 sequentially goes past the mountain-like protrusions on the support member 85 as described above while moving in an axial direction of the shaft member 87 against the spring force of the coiled spring 93.

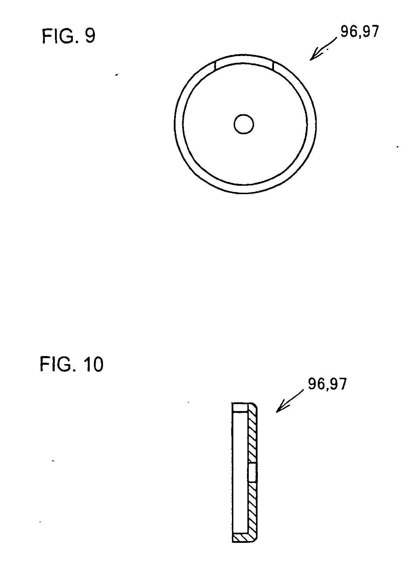

The canopy ribs 82, 83 are provided on the opposite side of the canopy rib 81 with respect to the support member 85, and canopy ribs 82, 83 have their ends covered by canopy rib covers 96, 97 shown in Figs. 9 and 10, respectively. An end of the shaft member 87 abuts on an end face of the canopy rib cover 97 and is constantly pressed toward the support member 85 by the spring force of the coiled spring 93. Since the canopy ribs 82, 83 are thus pressed against the canopy rib covers 96, 97, frictional force is produced at each contact surface. The canopy ribs 82, 83 are thus held at any pivoted position or expanded position by this frictional force.

In the baby carriage canopy of this embodiment having the above structure, the canopy rib 81 can first be held at any pivoted position with respect to the support member 85 by engagement between the corrugated portions 90, 95, and the canopy ribs 82, 83 can also be held at any position with respect to the canopy rib 81 within a spreadable range of the canopy cloth 84. Accordingly, the whole canopy can be movable in the front-back direction and can be set at any of a front position, rear position and intermediate position of the baby carriage. The canopy can also be set to any desired expansion angle from a fully opened state to a completely closed state.

Note that three canopy ribs are provided in this embodiment. However, it should be understood that the same effects as those of this embodiment can be obtained even when, for example, the canopy rib 82 or 83 is removed, that is, even when two canopy ribs are provided. Moreover, the corrugated portions 90, 95 are continuously formed along a circumferential direction of the support member 85 and the bracket 92, respectively. However, the corrugated portions 90, 95 may alternatively be formed at predetermined intervals.

Although an embodiment of the present invention has been described above with reference to the figures, the present invention is not limited to the above described and illustrated embodiment. Various modifications and variations can be made to the above described and illustrated embodiment within the scope of the present invention, as defined in the claims.

The present invention can thus be advantageously used in a canopied foldable baby carriage implementing reduction in weight with a simple structure.

## Claims

1. A canopied foldable baby carriage in which rear wheels (53) move toward front wheels (51) in a folding operation, and the rear wheels and the front wheels are located approximately at a same height in a folded state to enable self-standing of the baby carriage, comprising:
a pair of front legs (52) extending in an up-down direction and having front wheels (51) in their respective lower parts;
a pair of rear legs (54) extending in the up-down direction, having rear wheels (53) in their respective lower parts, and provided so as to cross said front legs and pivotally connected to said front legs at the crossing portions through pins, respectively;
a pair of seat support bars (55) extending in a front-back direction and having their respective front parts pivotally connected to upper parts of said rear legs;
a pair of seat hanging bars (56) extending in the up-down direction and having their respective lower parts pivotally connected to rear parts of said seat support bars;
a pair of push bars (57) extending in the up-down direction so as to cross said seat hanging bars, having their respective lower ends pivotally connected to upper ends of said front legs through pivot shafts, and pivotally connected to said seat hanging bars at the crossing portions, respectively;
width-direction connecting means formed by said each front leg, each rear leg, each seat support bar, each seat hanging bar, and each push bar for connecting left and right sides of the baby carriage;
opened state lock means (70) for locking an opened state of the baby carriage by inhibiting pivoting of said push bars with respect to said front legs with said push bars aligned approximately linearly with respect to said front legs, respectively;
**characterized in that** it further comprises:
closed state lock means (70) for locking a folded state of the baby carriage by inhibiting pivoting of said push bars with respect to said front legs with said push bars pivoted forward to a position where upper ends of said push bars get close to said front legs, respectively; and
a dome-shaped canopy (80) having its both ends in a width direction supported by said pair of push bars, respectively, wherein
said canopy (80) includes a support member (85) fixedly attached to said each push bar, a shaft member (87) attached to said each support member, and at least two canopy ribs (81, 82, 83) whose ends are held together by said shaft members like a pivot of a folding fan and which are structured so that an expansion angle is variable.

2. The canopied foldable baby carriage according to claim 1, wherein said opened state lock means (70) and said closed state lock means (70) are formed by a common member to serve as opened/closed state lock means, and said opened/closed state lock means includes
a front-leg-side engaging recess (71) located on the upper end of said each front leg and provided along a circle around said pivot shaft,
a push-bar-side engaging recess (72) located on the lower end of said each push bar and provided along a circle around said pivot shaft, and
a lock member (73) having an engaging protrusion for engaging with said front-leg-side engaging recess and said push-bar-side engaging recess, and provided displaceably between a first position and a second position along said pivot shaft, wherein when in said first position, said lock member engages both said front-leg-side engaging recess and said push-bar-side engaging recess to inhibit pivoting of said push bar with respect to said front leg, and when in said second position, said lock member engages only one of said front-leg-side engaging recess and said push-bar-side engaging recess to allow pivoting of said push bar with respect to said front leg, said opened/closed state lock means further includes
a biasing member (74) for biasing said lock member toward said first position, and
a press member (75) for moving said lock member to said second position against biasing force of said biasing member.

3. The canopied foldable baby carriage according to claim 2, wherein said lock member (73) has a gear shape centering around said pivot shaft, and said front-leg-side engaging recess and said push-bar-side engaging recess have a gear-shaped recess centering around said pivot shaft.

4. The canopied foldable baby carriage according to one of claims 1 to 3, wherein said canopy includes a bracket (92) mounted to said support member so as to be movable in an axial direction of said shaft member and pivotable in a circumferential direction of said shaft member, and a spring member (93) for spring biasing said bracket toward said support member, wherein a corrugated portion (90, 95) is formed on facing surfaces of said bracket and said support member in the mounted portion of said bracket and said support member, and one of said canopy ribs is fixed to said bracket.

5. The canopied foldable baby carriage according to claim 4, wherein said corrugated portion (90, 95) has a wave pattern in which slant faces having opposite tilt directions are alternately arranged, and when said bracket is pivoted, protrusions on said bracket sequentially go past protrusions on said support member against pressing force of said spring member to fit in a next recess.

## Patentansprüche

1. Überdachter, zusammenklappbarer Kinderwagen, bei dem sich bei einem Zusammenklappvorgang Hinterräder (53) zu Vorderrädern (51) bewegen, und sich die Hinterräder und die Vorderräder in einem zusammengeklappten Zustand ungefähr auf einer selben Höhe befinden, um ein Selbststehen des Kinderwagens zu ermöglichen, aufweisend:
Ein Paar Vorderbeine (52), die sich in einer Auf-AbRichtung erstrecken und Vorderräder (51) in ihren jeweiligen unteren Teilen aufweisen;
ein Paar Hinterbeine (54), die sich in der Auf-AbRichtung erstrecken und Hinterräder (53) in ihren jeweiligen unteren Teilen aufweisen, und die so vorgesehen sind, um die Vorderbeine zu kreuzen, und die jeweils mit den Vorderbeinen an den Kreuzungsabschnitten durch Stifte drehbar verbunden sind;
ein Paar Sitztragestangen (55), die sich in einer Vor-Zurück-Richtung erstrecken und deren jeweilige vordere Teile drehbar mit oberen Teilen der Hinterbeine verbunden sind;
ein Paar Sitzeinhängestangen (56), die sich in der Auf-Ab-Richtung erstrecken und deren jeweilige untere Teile drehbar mit hinteren Teilen der Sitztragestangen verbunden sind;
ein Paar Schiebestangen (57), die sich in der Auf-AbRichtung so erstrecken um die Sitzeinhängestangen zu kreuzen, und deren jeweilige untere Enden durch Drehwellen drehbar mit oberen Enden der Vorderbeine verbunden sind, und die jeweils mit den Sitzeinhängestangen an den Kreuzungsabschnitten verbunden sind;
Verbindungsmittel in Breiten-Richtung, die durch jedes Vorderbein, jedes Hinterbein, jede Sitztragestange, jede Sitzeinhängestange und jede Schiebestange gebildet werden, um rechte und linke Seiten des Kinderwagens zu verbinden;
Verriegelungsmittel des aufgeklappten Zustands (70) zum Verriegeln eines aufgeklappten Zustands des Kinderwagens, wobei die Schiebestangen jeweils annähernd geradlinig bezüglich der Vorderbeine ausgerichtet sind, durch Verhindern des Drehens der Schiebestangen bezüglich der Vorderbeine;
**dadurch gekennzeichnet, dass** er weiterhin aufweist:
Verriegelungsmittel des zusammengeklappten Zustands (70), zum Verriegeln eines zusammengeklappten Zustands des Kinderwagens mit den Schiebestangen nach vorne in eine Position gedreht, in der obere Enden der Schiebestangen jeweils nahe zu den Vorderbeinen gelangen, durch Verhindern des Drehens der Schiebestangen bezüglich der Vorderbeine; und
eine kuppelförmige Überdachung (80) deren beider Enden in einer Breiten-Richtung jeweils durch die Schiebestangen gelagert sind, wobei
die Überdachung (80) ein an jeder Schiebestange fest angebrachtes Lagerungselement (85), ein an jedem Lagerungselement angebrachtes Wellenelement (87) und zumindest zwei Überdachungsstäbe (81, 82, 83) enthält, deren Enden durch die Wellenelemente wie ein Drehgelenk eines Fächers zusammengehalten werden, und die so aufgebaut sind, dass ein Ausbreitwinkel variabel ist.

2. Überdachter, zusammenklappbarer Kinderwagen gemäß Anspruch 1, wobei das Verriegelungsmittel des aufgeklappten Zustands (70) und das Verriegelungsmittel des zusammengeklappten Zustands (70) durch ein gemeinsames Element gebildet werden, um als ein Verriegelungsmittel des aufgeklappten/zusammengeklappten Zustands zu dienen, und das Verriegelungsmittel des aufgeklappten/zusammengeklappten Zustands enthält:
Eine vorderbeinseitige Eingriffsvertiefung (71), die an dem oberen Ende jedes Vorderbeins angeordnet ist und entlang eines Kreises um die Drehwelle vorgesehen ist,
eine schiebestangenseitige Eingriffsvertiefung (72), die an dem unteren Ende jeder Schiebestange angeordnet ist und entlang eines Kreises um die Drehwelle vorgesehen ist, und
ein Verriegelungselement (73) mit einem eingreifenden Vorsprung, um mit der vorderbeinseitigen Eingriffsvertiefung und der schiebestangenseitigen Eingriffsvertiefung in Eingriff zu gelangen, und das entlang der Drehwelle zwischen einer ersten Position und einer zweiten Position verschiebbar vorgesehen ist, wobei in der ersten Position das Verriegelungselement sowohl mit der vorderbeinseitigen Eingriffsvertiefung als auch mit der schiebestangenseitigen Eingriffsvertiefung im Eingriff ist, um ein Drehen der Schiebestange bezüglich des Vorderbeins zu verhindern, und in der zweiten Position das Verriegelungselement nur mit der vorderbeinseitigen Eingriffsvertiefung oder der schiebestangenseitigen Eingriffsvertiefung im Eingriff ist, um ein Drehen der Schiebestange bezüglich des Vorderbeins zu erlauben, wobei das Verriegelungsmittel des aufgeklappten/zusammengeklappten Zustands weiterhin enthält:
Ein Vorspannelement (74) zum Vorspannen des Verriegelungselements in die erste Position, und
ein Drückelement (75) zum Bewegen des Verriegelungselements gegen eine Vorspannkraft des Vorspannelements in die zweite Position.

3. Überdachter, zusammenklappbarer Kinderwagen gemäß Anspruch 2, wobei das Verriegelungselement (73) eine um die Drehwelle zentrierende Zahnradform aufweist, und die vorderbeinseitige Eingriffsvertiefung und die schiebestangenseitige Eingriffsvertiefung eine um die Drehwelle zentrierende zahnradförmige Vertiefung aufweist.

4. Überdachter, zusammenklappbarer Kinderwagen gemäß einem der Ansprüche 1 bis 3, wobei die Überdachung einen an dem Lagerungselement montierten Träger (92), um in einer axialen Richtung des Wellenelements verschiebbar und in einer umfänglichen Richtung des Wellenelements drehbar zu sein, und ein Federelement (93) enthält, um den Träger zu dem Lagerungselement federnd vorzuspannen, wobei ein gewellter Abschnitt (90, 95) auf zueinander gerichteten Oberflächen des Trägers und des Lagerungselements in dem zusammenmontierten Abschnitt des Trägers und des Lagerungselements gebildet ist, und einer der Überdachungsstäbe an dem Träger befestigt ist.

5. Überdachter, zusammenklappbarer Kinderwagen gemäß Anspruch 4, wobei der gewellte Abschnitt (90, 95) ein Wellenmuster aufweist, in dem schräge Flächen mit entgegengesetzten Neigungsrichtungen abwechselnd angeordnet sind, und wenn der Träger gedreht wird, Vorsprünge auf dem Träger nacheinander an Vorsprüngen auf dem Lagerungselement gegen eine Anpresskraft des Federelements vorbeigehen, um in eine nächste Vertiefung zu passen.

## Revendications

1. Landau pliable à toit de protection dans lequel des roues arrière (53) se déplacent vers des roues avant (51) lors d'une opération de pliage, et les roues arrière et les roues avant se trouvent approximativement à la même hauteur dans un état plié afin de permettre l'auto-maintien du landau, comprenant :
une paire de pieds avant (52) s'étendant dans la direction montante-descendante et ayant des roues avant (51) dans leurs parties inférieures respectives;
une paire de pieds arrière (54) s'étendant dans la direction montante-descendante, ayant des roues arrière (53) dans leurs parties inférieures respectives, et prévus de manière à croiser lesdits pieds avant et reliés de manière pivotante auxdits pieds avant au niveau des portions de croisement par des broches, respectivement;
une paire de barres (55) de soutien de siège s'étendant dans une direction avant-arrière et ayant leurs parties avant respectives reliées de manière pivotante aux parties supérieures desdits pieds arrière;
une paire de barres (56) de suspension de siège s'étendant dans la direction montante-descendante et ayant leurs parties inférieures respectives reliées de manière pivotante aux parties arrière desdites barres de soutien de siège;
une paire de barres de poussée (57) s'étendant dans la direction montante-descendante de sorte à croiser lesdites barres de suspension de siège, ayant leurs extrémités inférieures respectives reliées de manière pivotante aux extrémités supérieures desdits pieds avant par le biais d'arbres de pivotement, et reliées de manière pivotante auxdites barres de suspension de siège au niveau des portions de croisement, respectivement;
un moyen de raccordement dans la direction de largeur formé par lesdits chaque pied avant, chaque pied arrière, chaque barre de soutien de siège, chaque barre de suspension de siège, et chaque barre de poussée pour relier les côtés gauche et droit du landau;
un moyen (70) de verrouillage d'un état ouvert qui sert à verrouiller un état ouvert du landau en empêchant le pivotement desdites barres de poussée par rapport auxdits pieds avant avec lesdites barres de poussée alignées de manière approximativement linéaire par rapport auxdits pieds avant, respectivement.
**caractérisé en ce qu'**il comprend en plus
un moyen (70) de verrouillage d'un état fermé qui sert à verrouiller un état plié du landau en empêchant le pivotement desdites barres de poussée par rapport auxdits pieds avant avec lesdites barres de poussée mises en rotation vers l'avant à une position où des extrémités supérieures desdites barres de poussée se rapprochent desdits pieds avant, respectivement; et
un toit de protection (80) en forme de dôme ayant ses deux extrémités dans une direction de largeur soutenues par ladite paire de barres de poussée, respectivement, où
ledit toit de protection (80) comporte un élément de soutien (85) fixé auxdites chaque barre de poussée, un élément d'arbre (87) fixé auxdits chaque élément de soutien, et au moins deux nervures (81, 82, 83) de toit de protection dont les extrémités sont maintenues ensemble par lesdits éléments d'arbre comme un pivot d'un ventilateur repliable et qui sont structurées de sorte qu'un angle d'extension soit variable.

2. Landau pliable à toit de protection selon la revendication 1, dans lequel ledit moyen (70) de verrouillage d'un état ouvert et ledit moyen (70) de verrouillage d'un état fermé sont formés par un élément commun faisant office de moyen de verrouillage d'un état ouvert/fermé, et ledit moyen de verrouillage d'un état ouvert/fermé inclut
un évidement d'engagement (71) côté pied avant situé sur l'extrémité supérieure desdites chaque pied avant et prévu le long d'un cercle autour dudit arbre de pivotement,
un évidement d'engagement (72) côté barre de poussée situé sur l'extrémité inférieure desdites chaque barre de poussée et prévu le long d'un cercle autour dudit arbre de pivotement, et
un élément de verrouillage (73) ayant une protubérance d'engagement pour s'engager avec ledit évidement d'engagement côté pied avant et ledit évidement d'engagement côté barre de poussée, et prévu de manière à pouvoir être déplacé entre une première position et une deuxième position le long dudit arbre de pivotement, où lorsque dans ladite première position, ledit élément de verrouillage s'engage avec ledit évidement d'engagement côté pied avant ainsi que ledit évidement d'engagement côté barre de poussée afin d'empêcher le pivotement de ladite barre de poussée par rapport audit pied avant, et lorsque dans ladite deuxième position, ledit élément de verrouillage ne s'engage qu'avec un évidement dudit évidement d'engagement côté pied avant et dudit évidement d'engagement côté barre de poussée afin d'habiliter le pivotement de ladite barre de poussée par rapport audit pied avant, ledit moyen de verrouillage d'un état ouvert/fermé comporte en outre
un élément de sollicitation (74) qui sert à solliciter ledit élément de verrouillage vers ladite première position, et
un élément de pression (75) qui sert à déplacer ledit élément de verrouillage à ladite deuxième position contre une force de sollicitation dudit élément de sollicitation.

3. Landau pliable à toit de protection selon la revendication 2, dans lequel ledit élément de verrouillage (73) a une forme d'un engrenage se centrant autour dudit arbre de pivotement, et ledit évidement d'engagement côté pied avant et ledit évidement d'engagement côté barre de poussée ont un évidement en forme d'engrenage se centrant autour dudit arbre de pivotement.

4. Landau pliable à toit de protection selon l'une des revendications 1 à 3, dans lequel ledit toit de protection inclut une tête de cheval (92) montée au niveau dudit élément de soutien de manière à pouvoir se déplacer dans une direction axiale dudit élément d'arbre et pouvant pivoter dans une direction circonférentielle dudit élément d'arbre, et un élément ressort (93) pour solliciter par effet ressort ladite tête de cheval vers ledit élément de soutien, où une portion ondulée (90, 95) est formée sur des surfaces de face de ladite tête de cheval et ledit élément de soutien dans la portion montée de ladite tête de cheval et dudit élément de soutien, et l'une desdites nervures du toit de protection est fixée à ladite tête de cheval.

5. Landau pliable à toit de protection selon la revendication 4, dans lequel ladite portion ondulée (90, 95) dispose d'un motif d'ondulation dans lequel des faces inclinées ayant des directions d'inclinaison opposées sont agencées par alternance, et lorsque ladite tête de cheval pivote, des protubérances sur ladite tête de cheval dépassent séquentiellement des protubérances sur ledit élément de soutien contre une force de pression dudit élément à ressort afin de s'ajuster dans un évidement subséquent.
